# EUROPEAN PATENT SPECIFICATION

(11) **EP 4 226 110 B1**
(45) Date of publication and mention of the grant of the patent: **24.09.2025**
(21) Application number: 21783359.9
(22) Date of filing: 05.10.2021
(51) Int. Cl.: F27D 3/16, C21C 5/30, C21C 5/46, C21C 5/32

(54) **STEELMAKING METHOD USING A LANCE FOR BLOWING OXYGEN**
STAHLHERSTELLUNGSVERFAHREN MIT EINER LANZE ZUM EINBLASEN VON SAUERSTOFF
PROCÉDÉ DE FABRICATION DE L'ACIER UTILISANT UNE LANCE POUR SOUFFLER DE L'OXYGÈNE

(30) Priority: 06.10.2020 WO PCT/IB2020/059353
(43) Date of publication of application: 16.08.2023
(73) Proprietor: ArcelorMittal, 1160 Luxembourg (LU)
(72) Inventor: DRELON, Benoît, 59470 Wormhout (FR)
(74) Representative: Lavoix
(86) International application number: PCT/IB2021/059121
(87) International publication number: WO 2022/074555

(56) References cited:
- US-A- 3 697 058
- US-A- 3 730 505
- US-A- 5 865 876

## Description

The invention is related to a steelmaking method using a converter and a lance for blowing oxygen.

In steel-refining, the main starting materials are usually a mixture of liquid pig-iron and scrap. The quantity of scrap which can be added, i.e. the scrap addition or scrap rate, depends notably on the temperature of the liquid pig iron and on the quantity of heat generated in the converter by oxidation of chemical elements. Most of it concerns the transformation of carbon into carbon monoxide CO and then into dioxide CO₂. The more CO₂ is formed, the more heat is created and may be transferred to bath so as to provide energy for additional scrap melting. The transformation of CO to CO₂ is known as post-combustion.

Typically, with usual single oxygen flow, very little CO is post-combusted into CO₂ inside the vessel. By injecting a secondary flow of oxygen during the process, the unburned CO moving upward meets additional O₂ provided by this secondary flow and is then combusted into CO2. The reaction is defined by the commonly known equation: CO + ½O2 = CO2.

There are two different technologies which have been developed to provide the secondary flow of oxygen. The first one consists in having a single oxygen flow supply and then split it in a primary flux for standard decarburization and a secondary flow for enhancing post-combustion.

This first technology has the advantage of requiring few modifications of existing lances and for example to keep same lance diameter and weight, thus not impairing the overall support structure of the lance and reducing investment costs. Disadvantage is that the secondary flow rate of oxygen being defined by the surface ratio between primary and secondary oxygen ejection means, it cannot be managed independently form the primary flow according to the process phases. Also, if oxygen supply is limited, primary oxygen flow is reduced, which impairs the decarburization process and productivity.

The second technology consists in having a double flow lances, wherein primary and secondary flows of oxygen have their own supply and are independently controlled. An example of a lance according to this technology is illustrated in patent US 5,681,526. Main advantage of this technology is that primary and secondary flows of oxygen are independently controlled which allows to more accurately control the post-combustion process and thus to increase the post-combustion rate. Disadvantage of this technology is that it requires an overall change on the installation and thus high investment cost.

Patents US3,730,505 and US 3,697,058 illustrate prior art oxygen lances including primary and secondary oxygen ejection means.

There is so a need for a lance allowing to perform a controlled post-combustion which can be easily implemented on existing installation and with a reduced investment cost.

This problem is solved by a method according to claim 1, the lance having an upper and a lower part and comprising a main tube for the supply of a primary flux of oxygen, a second tube surrounding the main tube to form a first annular gap for the circulation of cooling water within the lance, a third tube surrounding the second tube to form a second annular gap for the supply of a secondary flux of oxygen and extending only along the upper part of the lance, a fourth tube comprising a first part surrounding the third tube along the upper part of the lance and the second part surrounding the second tube along the lower part of the lance to form a third annular gap for circulation of cooling water within the lance, a tip, located at the end of the lower part of the lance, provided with at least one primary oxygen ejection mean for blowing the primary flux of oxygen which is designed to be in fluid connexion with both first and third annular gaps to insure circulation of water within the lance, and a distributor making the junction between the upper and the lower part of the lance, said distributor being provided with at least one secondary oxygen ejection mean in fluid connexion with the third gap for blowing the secondary flux of oxygen, the secondary oxygen ejection means being located at distance d above the primary oxygen ejection mean such as the ratio between the distance d and the internal diameter D of the converter is from 0,04 to 0,15.

The method of the invention may also comprise the following optional characteristics considered separately or according to all possible technical combinations:
- the ratio between the distance d and the internal diameter D of the converter 2 is from 0,08 to 0,15
- secondary oxygen ejection means of the distributor are located between 150 and 750 mm above the primary oxygen ejection means of the tip,
- the distributor is provided with sealing means preventing leakage of water,
- the distributor is mounted slidable around the fourth tube of the lance,
- the tip comprises at least four primary oxygen ejection means,
- the primary oxygen ejection means have a diameter comprised from 40 to 50mm,
- the primary oxygen ejection means have a diameter comprised from 40 to 45mm,
- the primary oxygen ejection means are designed so as to eject the primary flux of oxygen with an ejection angle α with the central axis Z of the lance from 10 to 20°,
- the primary oxygen ejection means are designed so as to eject the primary flux of oxygen with an ejection angle α with the central axis Z of the lance from 14 to 18°,
- the secondary oxygen ejection means have an oblong shape,
- the biggest width of the secondary oxygen ejection means is from 10 to 25mm,
- the first annular gap 31 allows the entry of water into the lance and the third annular gap allows the exit of water from the lance.

Other characteristics and advantages of the invention will emerge clearly from the description of it that is given below by way of an indication and which is in no way restrictive, with reference to the appended figures in which:
- Figure 1 illustrates a post-combustion method in a converter
- Figure 2 illustrates a post-combustion lance according to an embodiment of the invention

Elements in the figures are illustration and may not have been drawn to scale.

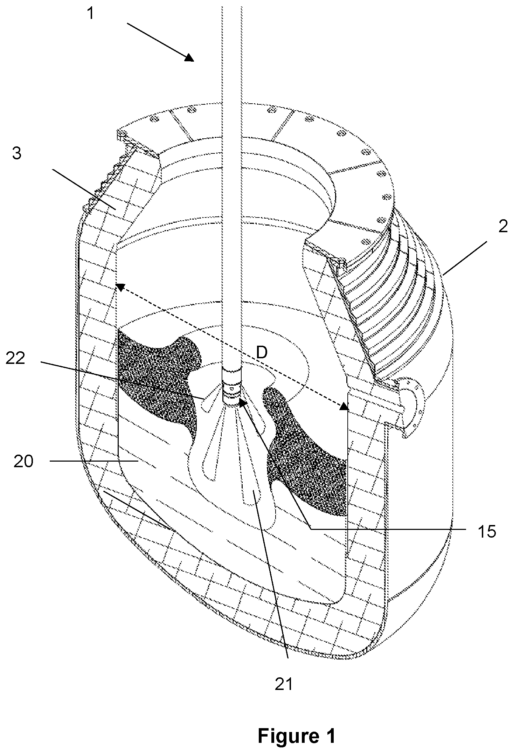

Figure 1 illustrates a converter 2 containing a bath of molten metal 20. The converter 2 is internally covered with a wall of refractories 3 and has a dimeter D. The molten metal is pig iron which needs to be decarburized to produce steel. To perform such a decarburization, a lance 1 is inserted into the converter and blows a primary flux of oxygen 21 towards the molten metal 20 through an ejection mean provided in the tip 15 of the lance. This decarburization allows to remove carbon from the bath as CO. In order to combust the unburned CO on the slag layer into CO₂, a secondary flux of oxygen 22 is injected towards the bath. This reaction is exothermic and releases a lot of energy which can be further used to melt scrap into the molten bath.

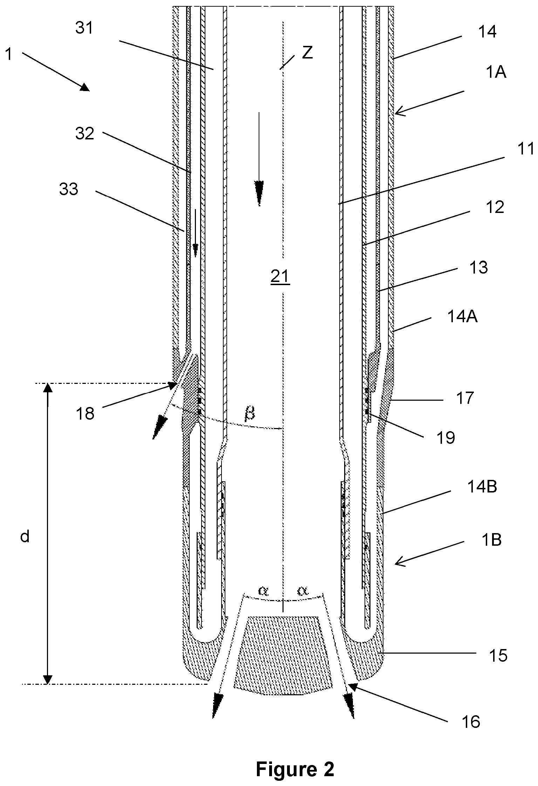

This double oxygen ejection is performed with a post combustion lance, as the one illustrated in figure 2, according to one embodiment of the invention. As a purpose of information, such a lance is usually more than 20 meters long. The post-combustion lance 1 according to the invention comprises a plurality of tubes which surround one another and are concentric to a central longitudinal axis of the lance Z. The lance according to the invention is made of an upper part 1A and of a lower part 1B joined together by a distributor 17. The lower part 1B of the lance is the one closest to the bath 20 when inserted into the steelmaking vessel 2. The lance is composed of a first tube 11 which supplies the primary flux of oxygen 21, a second tube 12, which surrounds the main tube 11 thus forming a first annular gap 31 for the supply of cooling water within the lance 1. The lance being subjected to high temperature within the steelmaking process it needs to be constantly cooled down so as to avoid being quickly damaged. Those two first tubes go along the whole length of the lance, each in a single part, which allows reducing risks of tightness issues. The first tube 11 is preferentially made of a material allowing the passage of a flow at a speed of at least 60m/s, such as stainless steel.

The lance 1 then comprises a third tube 13, surrounding the second tube 12 to form a second annular gap 32 for the supply of the secondary flux of oxygen 22 necessary for the post-combustion. This third tube does not extend all along the length of the lance 1 but only along the upper part 1A. This third tube is preferentially designed so that there is a ratio of 1/5 between the section of the gap for the circulation of the primary of oxygen and the section of the gap for the circulation of the secondary flux of oxygen. The lance comprises than a fourth tube 14, comprising a first part 14A, which surrounds the third tube 13 along the upper part 1A of the lance, and a second part 14B surrounding the second tube 12 along the lower part 1B of the lance. This fourth tube 14 thus form a third annular gap 33 allowing to draw off the cooling water. In another embodiment, the first annular gap 31 may be designed to drawn off the cooling water from the lance 1 while the third annular gap 33 allows the entry of the water within the lance 1.

The lance 1 further comprises a tip 15, closing the lower part of the lance 1B. This tip is in fluid connexion with both first and third annular gaps so as to close the water circuit and provide circulation of water within the lance. This furthermore allows the cooling down of the tip 15 itself which is the closest part to the molten steel and thus subjected to the highest temperatures. The tip is provided with at least one primary oxygen ejection mean 16 for blowing primary flow of oxygen 21 onto the bath of molten steel and allowing decarburization. In a preferred embodiment the tip is provided with at least four primary oxygen ejection means 16, the optimal number depending notably of the size of the ladle and thus of the circumference of the molten bath. The diameter of the primary oxygen ejection means depends on the same parameters. In a preferred embodiment, those primary oxygen ejection means 16 have a diameter comprised between 40 and 50mm, preferentially between 40 and 45mm. In a preferred embodiment these ejection means are designed so as to eject the primary flux of oxygen with an ejection angle α with the central axis Z of the lance 1 comprised between 10 and 20°, preferentially between 14 and 18°. This allows to find the good compromise between maximisation of the surface of the molten bath receiving oxygen ang keeping sufficient distance from the refractories walls to avoid damaging them.

The lance is designed to receive a distributor 17 making the junction between the upper 1A and the lower part 1B of the lance and ensuring the circulation of water between the upper 14A and the lower 14B parts of the fourth tube. This distributor 17 is provided with at least one secondary oxygen ejection mean 18 in fluid connexion with the third tube 13 for blowing the secondary flux of oxygen 22 onto the bath of molten steel. This secondary flux of oxygen will provide necessary fuel for the further combustion of CO and the release of additional energy for scrap melting. In a preferred embodiment the distributor 17 is provided with the same number of secondary ejection means 18 as the number of primary ejection means 16 provided on the tip 15. These ejection means 18 may have exits with a diameter comprised between 10 and 25mm. Said exits may have an oblong or circular shape. Secondary oxygen ejection means 18 are located at a distance d above the primary oxygen ejection means 16 of the tip 15 such as the ratio (d/D) between the distance d and the internal diameter D of the converter 2 is from 0,04 to 0,15, preferentially from 0,08 to 0,15. They may be located between 500 and 750mm above the first oxygen ejection means 16 of the tip 15. This distance d between both ejection means allow to enhance the efficiency of the secondary flux of oxygen by promoting the mixing of CO and O2 into the bath.

In a most preferred embodiment the distributor is mounted on the lance 1 so as to be able to slide of few centimetres, less than 5 cm, along the pipe 12 in order to follow the thermal expansion of the external tube 14 due to thermal constraints it is subjected to. This is done by appropriate means, such as O-rings 19. The distributor is furthermore provided with sealing means preventing water leakage in the annular gaps supplying the oxygen flows. These sealing means are for example O-rings.

With the lance according to the invention it is possible to insert the third tube 13 within the others and thus the external diameter of the lance is not increased compared to existing lance and there is thus no need to replace the overall supporting structure of the lance which reduce investment costs for the post-combustion process. Moreover, the secondary flux of oxygen crosses only once the water circulation channels, which allows to limit the water pressure losses compared to prior art combustion lances. Finally, with the lance according to the invention, risks of tightness issues are limited.

## Claims

1. A steelmaking method using a converter and a lance (1) for blowing oxygen onto a bath of molten steel (20) contained in the converter (2), said lance (1) having an upper part (1A) and a lower part (1B), the lower part (1B) being the closest to the bath of molten steel, the lance (1) comprising:
a. A main tube (11) for the supply of a primary flux of oxygen (21),
b. A second tube (12) surrounding the main tube (11) to form a first annular gap (31) for the circulation of cooling water within the lance (1),
c. A third tube (13) surrounding the second tube (12) to form a second annular gap (32) for the supply of a secondary flux of oxygen (22), said third tube extending only along the upper part (1A) of the lance,
d. A fourth tube (14), comprising two parts (14A, 14B), the first part (14A) surrounding the third tube (13) along the upper part of the lance (1A) and the second part (14B) surrounding the second tube (12) along the lower part of the lance (1B), to form a third annular gap (33) for circulation of cooling water within the lance (1),
e. A tip (15), located at the end of the lower part of the lance (1B), provided with at least one primary oxygen ejection mean (16) for blowing the primary flux of oxygen (21) onto the bath of molten steel and being designed to be in fluid connexion with both first (31) and third (33) annular gaps to insure circulation of water within the lance (1),
f. A distributor (17) making the junction between the upper (1A) and the lower part (1B) of the lance (1), said distributor (17) being provided with at least one secondary oxygen ejection mean (18) in fluid connexion with the third gap (33) for blowing the secondary flux of oxygen (22), said secondary oxygen ejection means (18) of the distributor (17) being located at distance d above the primary oxygen ejection mean (16) of the tip (15) such as the ratio between the distance d and the internal diameter D of the converter (2) is from 0,04 to 0,15.

2. A steelmaking method according to claim 1 wherein the ratio between the distance d and the internal diameter D of the converter (2) is from 0,08 to 0,15.

3. A steelmaking method according to claim 1 or 2 wherein secondary oxygen ejection means 18 of the distributor (17) are located from 150 to 750 mm above the primary oxygen ejection means (16) of the tip (15).

4. A steelmaking method according to anyone of the previous claims wherein the distributor (17) is provided with sealing means preventing leakage of water.

5. A steelmaking method according to anyone of the previous claims wherein the distributor (17) is mounted slidable around the fourth tube (14) of the lance 1.

6. A steelmaking method according to any of the previous claims wherein the tip (15) comprises at least four primary oxygen ejection means (16).

7. A steelmaking method according to anyone of the previous claims wherein the primary oxygen ejection means (16) have an exit diameter is from 40 to 50mm.

8. A steelmaking method according to claim 6 wherein the primary oxygen ejection means (16) have an exit diameter from 40 to 45mm.

9. A steelmaking method according to anyone of the previous claims wherein the primary oxygen ejection means are designed so as to eject the primary flux of oxygen with an ejection angle α with the central axis Z of the lance (1) from 10 to 20°.

10. A steelmaking method according to anyone of the previous claims wherein the primary oxygen ejection means are designed so as to eject the primary flux of oxygen with an ejection angle α with the central axis Z of the lance (1) from 14 to 18°.

11. A steelmaking method according to anyone of the preceding claims wherein the secondary oxygen ejection means (18) have an exit with an oblong shape.

12. A steelmaking method according to anyone of the other claims wherein the biggest dimension of the secondary oxygen ejection means (18) exits is from 10 to 25mm.

13. A steelmaking method according to anyone of the preceding claims wherein the first annular gap (31) allows the entry of water into the lance (1) and the third annular gap (33) allows the exit of water from the lance (1).

## Patentansprüche

1. Stahlherstellungsverfahren unter Verwendung eines Konverters und einer Lanze (1) zum Blasen von Sauerstoff auf ein Bad aus geschmolzenem Stahl (20), das in dem Konverter (2) enthalten ist, wobei die Lanze (1) einen oberen Teil (1A) und einen unteren Teil (1B) aufweist, wobei der untere Teil (1B) dem Bad aus geschmolzenem Stahl am nächsten ist, die Lanze (1) umfassend:
a. ein Hauptrohr (11) für die Zufuhr eines primären Sauerstoffstroms (21),
b. ein zweites Rohr (12), das das Hauptrohr (11) umgibt, um einen ersten ringförmigen Spalt (31) für die Zirkulation von Kühlwasser innerhalb der Lanze (1) zu bilden,
c. ein drittes Rohr (13), das das zweite Rohr (12) umgibt, um einen zweiten ringförmigen Spalt (32) für die Zufuhr eines sekundären Sauerstoffstroms (22) zu bilden, wobei sich das dritte Rohr nur entlang des oberen Teils (1A) der Lanze erstreckt,
d. ein viertes Rohr (14), umfassend zwei Teile (14A, 14B), wobei der erste Teil (14A) das dritte Rohr (13) entlang des oberen Teils der Lanze (1A) umgibt und der zweite Teil (14B) das zweite Rohr (12) entlang des unteren Teils der Lanze (1B) umgibt, um einen dritten ringförmigen Spalt (33) für die Zirkulation von Kühlwasser innerhalb der Lanze (1) zu bilden,
e. eine Spitze (15), die sich an dem Ende des unteren Teils der Lanze (1B) befindet und mit mindestens einer primären Sauerstoffausstoßeinrichtung (16) versehen ist, um den primären Sauerstoffstrom (21) auf das Bad aus geschmolzenem Stahl zu blasen, und die konstruiert ist, um sowohl mit dem ersten (31) als auch mit dem dritten (33) ringförmigen Spalt in Fluidverbindung zu sein, um die Zirkulation von Wasser innerhalb der Lanze (1) zu gewährleisten,
f. Verteiler (17), der die Verbindung zwischen dem oberen (1A) und dem unteren Teil (1B) der Lanze (1) herstellt, wobei der Verteiler (17) mit mindestens einer sekundären Sauerstoffausstoßeinrichtung (18) versehen ist, die mit dem dritten Spalt (33) in Fluidverbindung ist, um den sekundären Sauerstoffstrom (22) auszublasen, wobei sich die sekundäre Sauerstoffausstoßeinrichtung (18) des Verteilers (17) in einem solchen Abstand d über dem primären Sauerstoffausstoßeinrichtung (16) der Spitze (15) befindet, dass das Verhältnis zwischen dem Abstand d und dem Innendurchmesser D des Konverters (2) zwischen 0,04 und 0,15 ist.

2. Stahlherstellungsverfahren nach Anspruch 1, wobei das Verhältnis zwischen dem Abstand d und dem Innendurchmesser D des Konverters (2) 0,08 bis 0,15 ist.

3. Stahlherstellungsverfahren nach Anspruch 1 oder 2, wobei sich die sekundäre Sauerstoffausstoßeinrichtung 18 des Verteilers (17) 150 bis 750 mm über der primären Sauerstoffausstoßeinrichtung (16) der Spitze (15) befindet.

4. Stahlherstellungsverfahren nach einem der vorherigen Ansprüche, wobei der Verteiler (17) mit Dichtungseinrichtungen versehen ist, die ein Austreten von Wasser verhindern.

5. Stahlherstellungsverfahren nach einem der vorherigen Ansprüche, wobei der Verteiler (17) verschiebbar um das vierte Rohr (14) der Lanze 1 montiert ist.

6. Stahlherstellungsverfahren nach einem der vorherigen Ansprüche, wobei die Spitze (15) mindestens vier primäre Sauerstoffausstoßeinrichtungen (16) umfasst.

7. Stahlherstellungsverfahren nach einem der vorherigen Ansprüche, wobei die primären Sauerstoffausstoßeinrichtungen (16) einen Austrittsdurchmesser von 40 bis 50 mm aufweisen.

8. Stahlherstellungsverfahren nach Anspruch 6, wobei die primären Sauerstoffausstoßeinrichtungen (16) einen Austrittsdurchmesser von 40 bis 45 mm aufweisen.

9. Stahlherstellungsverfahren nach einem der vorherigen Ansprüche, wobei die primären Sauerstoffausstoßeinrichtungen konstruiert sind, um den primären Sauerstoffstrom mit einem Ausstoßwinkel α mit der Mittelachse Z der Lanze (1) von 10 bis 20° auszustoßen.

10. Stahlherstellungsverfahren nach einem der vorherigen Ansprüche, wobei die primären Sauerstoffausstoßeinrichtungen konstruiert sind, um den primären Sauerstoffstrom mit einem Ausstoßwinkel α mit der Mittelachse Z der Lanze (1) von 14 bis 18° auszustoßen.

11. Stahlherstellungsverfahren nach einem der vorherigen Ansprüche, wobei die sekundären Sauerstoffausstoßeinrichtungen (18) einen Ausgang mit länglicher Form aufweisen.

12. Stahlherstellungsverfahren nach einem der anderen Ansprüche, wobei die größte Abmessung der Ausgänge der sekundären Sauerstoffausstoßveinrichtungen (18) 10 bis 25 mm ist.

13. Stahlherstellungsverfahren nach einem der vorherigen Ansprüche, wobei der erste ringförmige Spalt (31) den Eintritt von Wasser in die Lanze (1) zulässt und der dritte ringförmige Spalt (33) den Austritt von Wasser aus der Lanze (1) zulässt.

## Revendications

1. Procédé de fabrication d'acier utilisant un convertisseur et une lance (1) pour souffler de l'oxygène sur un bain d'acier fondu (20) contenu dans le convertisseur (2), ladite lance (1) ayant une partie supérieure (1A) et une partie inférieure (1B), la partie inférieure (1B) étant la plus proche du bain d'acier fondu, la lance (1) comprenant :
a. Un tube principal (11) pour l'alimentation d'un flux primaire d'oxygène (21),
b. Un deuxième tube (12) entourant le tube principal (11) pour former un premier espace annulaire (31) pour la circulation de l'eau de refroidissement à l'intérieur de la lance (1),
c. Un troisième tube (13) entourant le deuxième tube (12) pour former un deuxième espace annulaire (32) pour l'alimentation d'un flux secondaire d'oxygène (22), ledit troisième tube s'étendant uniquement le long de la partie supérieure (1A) de la lance,
d. Un quatrième tube (14), comprenant deux parties (14A, 14B), la première partie (14A) entourant le troisième tube (13) le long de la partie supérieure de la lance (1A) et la seconde partie (14B) entourant le deuxième tube (12) le long de la partie inférieure de la lance (1B), pour former un troisième espace annulaire (33) pour la circulation de l'eau de refroidissement à l'intérieur de la lance (1),
e. Une pointe (15), située à l'extrémité de la partie inférieure de la lance (1B), pourvue d'au moins un moyen primaire d'éjection d'oxygène (16) pour souffler le flux primaire d'oxygène (21) sur le bain d'acier fondu et étant conçue pour être en connexion fluidique avec les premier (31) et troisième (33) espaces annulaires afin d'assurer la circulation de l'eau à l'intérieur de la lance (1),
f. Un distributeur (17) faisant la jonction entre la partie supérieure (1A) et la partie inférieure (1B) de la lance (1), ledit distributeur (17) étant pourvu d'au moins un moyen secondaire d'éjection d'oxygène (18) en connexion fluidique avec le troisième espace (33) pour souffler le flux secondaire d'oxygène (22), ledit moyen secondaire d'éjection d'oxygène (18) du distributeur (17) étant situé à une distance d au-dessus du moyen primaire d'éjection d'oxygène (16) de la pointe (15) telle que le rapport entre la distance d et le diamètre interne D du convertisseur (2) est de 0,04 à 0,15.

2. Procédé de fabrication d'acier selon la revendication 1, dans lequel le rapport entre la distance d et le diamètre interne D du convertisseur (2) est de 0,08 à 0,15.

3. Procédé de fabrication d'acier selon la revendication 1 ou 2, dans lequel le moyen secondaire d'éjection d'oxygène (18) du distributeur (17) est situé de 150 à 750 mm au-dessus du moyen primaire d'éjection d'oxygène (16) de la pointe (15).

4. Procédé de fabrication d'acier selon l'une quelconque des revendications précédentes, dans lequel le distributeur (17) est pourvu d'un moyen d'étanchéité empêchant les fuites d'eau.

5. Procédé de fabrication d'acier selon l'une quelconque des revendications précédentes, dans lequel le distributeur (17) est monté de manière coulissante autour du quatrième tube (14) de la lance 1.

6. Procédé de fabrication d'acier selon l'une quelconque des revendications précédentes, dans lequel la pointe (15) comprend au moins quatre moyens primaires d'éjection d'oxygène (16).

7. Procédé de fabrication d'acier selon l'une quelconque des revendications précédentes, dans lequel les moyens primaires d'éjection d'oxygène (16) ont un diamètre de sortie de 40 à 50 mm.

8. Procédé de fabrication d'acier selon la revendication 6, dans lequel les moyens primaires d'éjection d'oxygène (16) ont un diamètre de sortie de 40 à 45 mm.

9. Procédé de fabrication d'acier selon l'une quelconque des revendications précédentes, dans lequel les moyens primaires d'éjection d'oxygène sont conçus pour éjecter le flux primaire d'oxygène à un angle d'éjection α par rapport à l'axe central Z de la lance (1) de 10 à 20°.

10. Procédé de fabrication d'acier selon l'une quelconque des revendications précédentes, dans lequel les moyens primaires d'éjection d'oxygène sont conçus pour éjecter le flux primaire d'oxygène à un angle d'éjection α par rapport à l'axe central Z de la lance (1) de 14 à 18°.

11. Procédé de fabrication d'acier selon l'une quelconque des revendications précédentes, dans lequel les moyens secondaires d'éjection d'oxygène (18) ont une sortie de forme oblongue.

12. Procédé de fabrication d'acier selon l'une quelconque des revendications précédentes, dans lequel la plus grande dimension de la sortie des moyens secondaires d'éjection d'oxygène (18) est de 10 à 25 mm.

13. Procédé de fabrication d'acier selon l'une quelconque des revendications précédentes, dans lequel le premier espace annulaire (31) permet l'entrée de l'eau dans la lance (1) et le troisième espace annulaire (33) permet la sortie de l'eau de la lance (1).
